# EUROPÄISCHE PATENTSCHRIFT

(11) **EP 0 813 279 B1**
(45) Veröffentlichungstag und Bekanntmachung des Hinweises auf die Patenterteilung: **06.11.2002**
(21) Anmeldenummer: 97107339.0
(22) Anmeldetag: 03.05.1997
(51) Int. Cl.: H02G 3/04

(54) **Als Blechformteil hergestellte Kopfplatte**
Head plate made of sheet metal
Plaque de tête en tôle préformée

(30) Priorität: 15.06.1996 DE 19623957; 12.03.1997 DE 19654889
(43) Veröffentlichungstag der Anmeldung: 17.12.1997
(73) Patentinhaber: Rico GmbH & Co. KG, 73230 Kirchheim (DE)
(72) Erfinder: Barner, Gerhard, 73230 Kirchheim/Teck-Ötlingen (DE); Fink, Ewald, 73095 Albershausen (DE); Wennrich, Hans-Oswald, 73275 Ohmden (DE)
(74) Vertreter: Patentanwälte Rüger, Barthelt & Abel

(56) Entgegenhaltungen:
- EP-A- 0 108 222
- DE-A- 2 804 819
- DE-U- 9 108 822

## Beschreibung

Wenn in Gebäuden große Mengen von Kabeln über gleiche Strecken verlegt werden müssen, so geschieht dies nicht, indem Kabel einzeln mit Schellen an der Wand befestigt werden, sondern mit Hilfe sogenannter Kabelrinnen oder Kabelpritschen, in denen die Kabel lose liegen. Die Kabelrinnen oder Kabelpritschen liegen ihrerseits auf Auslegern auf, die an Hängestielen befestigt sind. Um die Hängestiele an den Decken der Gebäude zu befestigen, werden sogenannte Kopfplatten verwendet, die das Bindeglied zwischen der Decke und dem betreffenden Stiel darstellen.

Die Kopfplatte ist keine Platte im geometrischen Sinne. Sie hat eine von der Scheiben- oder Plattenform abweichende Gestalt, insofern, als sie Strukturelemente aufweist, an denen der Stiel befestigt werden kann, der bei Deckenbefestigung rechtwinklig zu der von der Decke definierten Ebene wegsteht. Dieser rechtwinklige Verlauf spiegelt sich an der Kopfplatte wieder, die dementsprechend einen an der Decke zu befestigenden Flansch und einen rechtwinklig dazu verlaufenden Flansch zur Befestigung des Stiels aufweist. Diese beiden Teile sind bei den aus der Praxis bisher bekannten Kopfplatten miteinander verschweißte Stahlteile. Sie müssen gegen Korrosion geschützt werden, was üblicherweise durch Verzinken geschieht. Wegen des Schweißvorgangs kann kein vorverzinktes Halbzeug verwendet werde, denn durch das Schweißen würde die Verzinkung unter Erzeugung giftiger Gase wegbrennen, womit die Schweißnaht und die Umgebung der Schweißnaht ungeschützt sind. Folglich können nur unverzinkte Stahlteile zum Einsatz kommen und die fertig geschweißten Kopfplatten müssen anschließend einer Verzinkung in einem Verzinkungsbad unterzogen werden.

Ein vorheriges Verzinken der Rohteile wäre, verglichen mit diesem Verfahren, wesentlich kostengünstiger. Es könnten die zusätzlichen Wegekosten von dem Hersteller der Kopfplatten zu der Galvanisieranstalt und zurück vermieden werden.

Dagegen ist es bekannt, bei sehr geringen Lasten einstückige Kopfplatten zu verwenden, wie dies beispielsweise in dem RICO-Katalog der Firma Rieth & Co. GmbH, 1989, Seite 28, 29 gezeigt ist. Diese Kopfplatte hat etwa die Gestalt einer Kofferecke, wobei der Stielflansch und der Deckenflansch über einen etwa dreieckförmigen Versteifungsflansch miteinander verbunden sind. Der Deckenflansch ist doppellagig und besteht aus einer Lasche, die vom Verstärkungsflansch abgekantet ist und einer weiteren Lasche, die vom Stielflansch ausgeht.

Der Schwachpunkt bei dieser Lösung ist der Übergang von der Befestigungsschraube in den Deckenflansch. Die Lastabstrahlung aus der Befestigungsschraube in den Deckenflansch entspricht der Fläche der Beilagscheibe zwischen dem Deckenflansch und der Befestigungsmutter. Die ohne bleibende Verformung abzutragende Kraft ist recht gering.

In der DE 28 04 819 A1 ist eine Kopfplatte gezeigt, die als Blechstanz- und -biegeteil ausgeführt ist. Die fertig gebogene Kopfplatte weist einen Stielflansch auf, der an seinen beiden Längskanten, die im Gebrauch vertikal verlaufen mit Zwischen- oder Versteifungsflanschen versehen ist. Hierdurch bekommt der Stiel ein I-Profil.

Oberhalb des Stielflansches sind die beiden Versteifungs- oder Zwischenflansche rechtwinklig in Richtung von dem Stielflansch weg umgebogen und bilden zwei Abschnitte eines Deckenflansches.

Wenn der bekannte Deckenflansch mit einem Biegemoment beaufschlagt wird, dass in der Ebene des Stielflanschsteges wirksam ist, können die auftretenden Kräfte lediglich als Zugkräfte in einen der beiden Abschnitte des Deckenflansches eingeleitet werden. Ein Übertragen von Druckkräften über den jeweils anderen Deckenflanschabschnitt ist wegen der Geometrie der bekannten Kopfplatte nur begrenzt möglich.

In der G 91 0 8822 U1 ist ein Hängestiel gezeigt, bei dem die Kopfplatte unmittelbar an einem Ende des Stiels angeschweißt ist. Der Stiel selber besteht aus einem gewalzten I-Profil.

Aufgrund der Größe der Kopfplatte sind die über den Stiel abzutragenden Kräfte begrenzt. Um mit dem bekannten Hängestiel größere Kräfte abtragen zu können, ist es erforderlich, die Befestigungsschrauben in der tragenden Decke in einem Größeren Abstand zu setzen, damit sich die Spannungsfelder nicht überdecken. Zu diesem Zweck ist es aus der Druckschrift bekannt, zwei Verstärkungsflansche zu verwenden, die die Kopfplatte tragen.

Jeder Verstärkungsflansch ist ein Winkelprofil mit zwei rechtwinklig zueinander verlaufenden Flächenbereichen. Im montierten Zustand liegt der eine Flächenbereich jedes Winkelprofils an der Seite des Hängestiels an, während die anderen Flächenbereiche der beiden Profile einander überdecken. Im Bereich der Kopfplatte des Hängestils sind die die Kopfplatte aufnehmenden Flächenbereich in der Überlappungszone vertieft ausgeführt.

Ausgehend hiervon ist es deswegen Aufgabe der Erfindung, eine Kopfplatte zu schaffen, die aus vorverzinktem Halbzeug hergestellt werden kann, keine anschließende Schlußverzinkung erfordert und zu dem eine große Festigheit aufweist.

Diese Aufgabe wird erfindungsgemäß durch die Kopfplatte mit den Merkmalen des Anspruches 1 oder 2 gelöst.

Da die neue Kopfplatte ein einstückiges Blechformteil ist, kann zur Herstellung vorverzinktes, beispielsweise bandverzinktes, Stahlblech vom Coil eingesetzt werden. Die Materialstärke ist so gering, daß die beim Ausschneiden des Blechzuschnitts entstehenden blanken Kanten durch die vorhandenen beidseitigen Zinkschichten und die entstehenden elektrischen Felder mitgeschützt ist. Der Umformvorgang selbst beschädigt die Verzinkung nicht. Nach dem Ausstanzen des Blechzuschnitts und dem Umformen desselben zu der gewünschten Kopfplatte ist diese fertig. Ein weiterer Bearbeitungsschritt und die damit eventuell verbundenen Transportaufwendungen entfallen vollständig.

Bei der neuen Kopfplatte geht der Stielflansch an beiden Seiten an einer Biegelinie in je einen Zwischenflansch über und dieser wiederum über eine Biegelinie in den Deckenflansch.

Bei einer anderen Lösung ist eine zweiteilige Kopfplatte vorgesehen, deren Grundform aus einem Stielflansch besteht, der an einer Biegelinie in den Zwischenflansch übergeht. Dieser wiederum geht an einer weiteren Biegelinie in den Deckenflansch über. Diese so gestaltete Grundform wird mit einer weiteren gleichgestalteten Grundform zu einer Kopfplatte kombiniert, wobei die beiden Stielflansche flach aufeinanderliegen. Sie können mit Hilfe von Materialumformungsverfahren, beispielsweise Durchsetzfügen, miteinander verbunden werden. Die Zwischenflansche verlaufen auch bei dieser Konfiguration gleichsam abgekröpft, wodurch sich eine sehr hohe Biegesteifigkeit des Stielflansches in praktisch allen Richtungen ergibt.

Um bei beiden Konfigurationen die Form zu sichern und Rücksprungkräfte, die nach dem Biegen übrig bleiben, zu fesseln, können an den Deckenflanschen Laschen abgebogen sein, die mit dem Zwischenflansch des jeweils anderen Deckenflansches durch Materialumformung, wiederum beispielsweise mittels Durchsetzfügen, verbunden sind. Es besteht auch die Möglichkeit, Laschen zu verwenden, die an dem Stielflansch fixiert sind.

In der Zeichnung sind ein Ausführungsbeispiele des Gegenstandes der Erfindung dargestellt. Es zeigen:
Fig. 1 eine Prinzipdarstellung eines Kabeltragsystems, in einer perspektivischen Teilansicht,
Fig. 2 eine schwere, gekröpft ausgeführte Kopfplatte für das Kabeltragsystem nach Fig. 1, in einer perspektivischen Ansicht schräg von unten nach oben,
Fig. 3 den Blechzuschnitt, aus dem die Kopfplatte nach Fig. 2 entsteht, in einer Draufsicht,
Fig. 4 die Grundform einer Kopfplatte, die mit einer weiteren, gleichgestalteten Grundform zusammengesetzt wird, in einer perspektivischen Ansicht schräg von unten nach oben,
Fig. 5 den Blechzuschnitt, aus dem die Kopfplatte nach Fig. 4 entsteht,
Fig. 6 ein weiteres Ausführungsbeispiel für eine Kopfplatte für das Kabeltragsystem nach Fig. 1, in einer perspektivischen Ansicht schräg von unten nach oben und
Fig. 7 den für die Kopfplatte nach Fig. 6 erforderlichen Zuschnitt in einer Draufsicht.

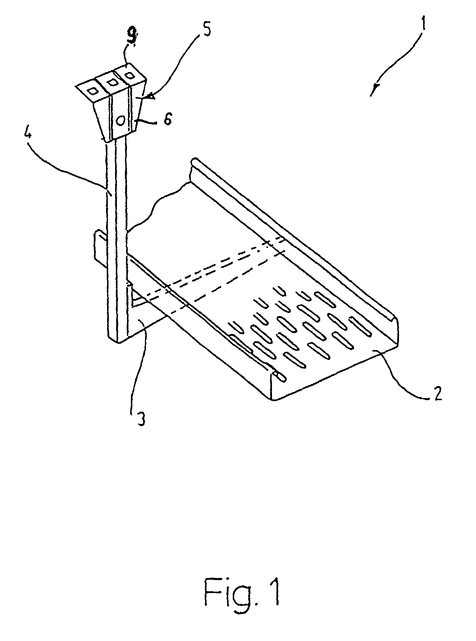

Fig. 1 zeigt ein Kabeltragsystem 1 in einer perspektivischen Ansicht. Dieses Kabeltragsystem 1, von dem lediglich ein Ausschnitt dargestellt ist, dient dazu, in Gebäuden große Bündel von Kabeln zu verlegen. Die nicht dargestellten Kabel liegen in sogenannten Kabelrinnen 2. An Stelle der gezeigten Kabelrinnen 2 können auch sogenannte Kabelpritschen zum Einsatz kommen.

Die Kabelrinnen 2 liegen in größeren Abständen von mehreren Metern auf Auslegern 3, die an Hängestielen 4 befestigt sind. Die Anbringung des Stiels 4 an der nicht dargestellten Decke des Gebäudes erfolgt mit Kopfplatten 5, die wenigstens einen Stielflansch 6, an dem der Stiel befestigt ist, sowie wenigstens einen Deckenflansch 9 aufweisen, der an der Decke des betreffenden Gebäudes anzubringen ist.

Fig. 1 zeigt eine hängende Montage des Stiels 4. An Stelle der hängenden Montage kann auch eine stehende Montage in Frage kommen. In diesem Falle ist die Kopfplatte 5 mit dem Deckenflansch 9 auf einem Boden des Gebäudes zu verschrauben.

Die Kopfplatte 5 ist in Fig. 1 stark vereinfacht dargestellt.

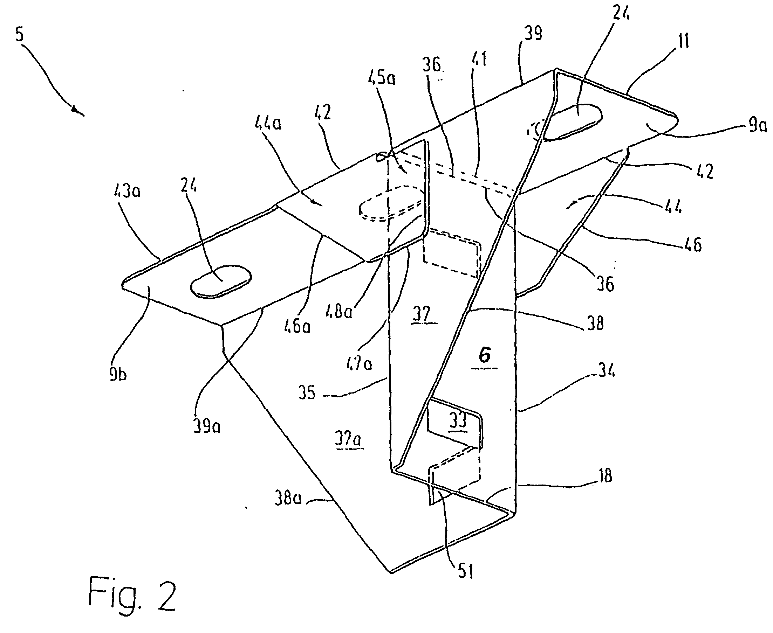

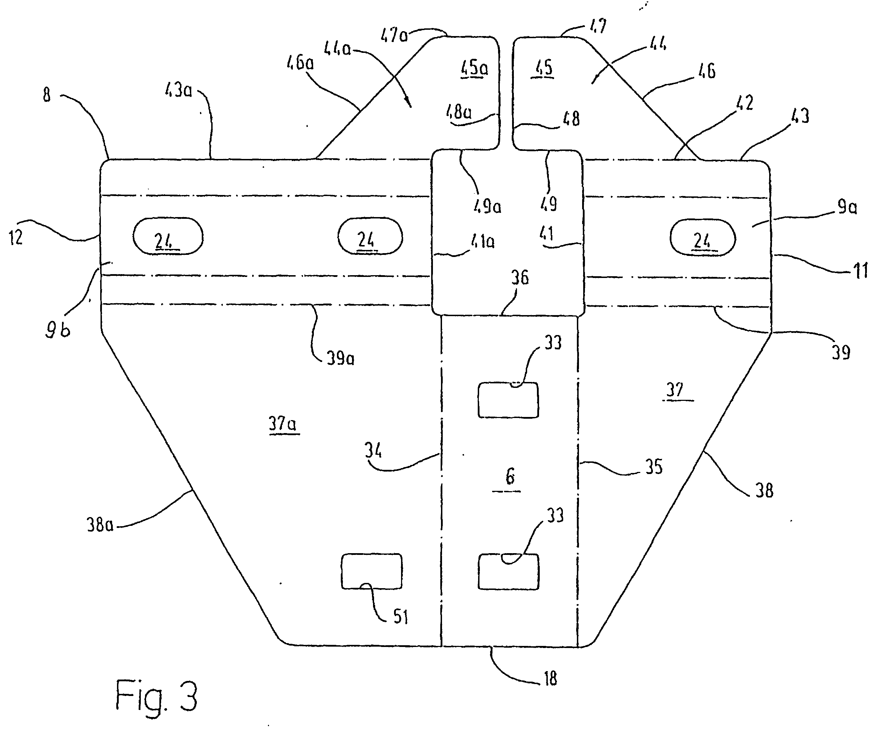

Die Fig. 2 zeigt eine erfindungsgemäße schwerere Ausführungsform der Kopfplatte 5, Fig. 3 ihren zugehörigen Blechzuschnitt 8 in einer Draufsicht.

Die Kopfplatte 5 ist ein einstückiges Blechformteil, das aus einem vorverzinkten Stahlblechzuschnitt 8 hergestellt ist. Die Kopfplatte 5 weist einen in der Draufsicht rechteckigen Deckenflansch mit den Abschnitten 9a und 9b auf. An den Enden in Längsrichtung wird er von Schnittkanten 11 und 12 begrenzt; seitlich von Biegekanten.

In den Deckenflanschabschnitten 9a, 9b sind Durchgangsöffnung 24 zur Befestigung der Kopfplatte 5 an der Decke ausgestanzt.

Der Stilflansch 6, der eine rechteckige Gestalt hat, ist mit den Deckenflanschabschnitten 9a, 9b einstückig verbunden. Er enthält rechteckige Durchgangsöffnung 33, die der Aufnahme des Vierkants einer Flachrundkopfschraube mit Vierkantansatz dienen, mit deren Hilfe der Stiel 4 an dem Stielflansch 6 befestigt wird.

Den zu der Kopfplatte 5 gehörenden Blechzuschnitt 8 zeigt Fig. 3 in einer Draufsicht.

Der Stielflansch 6 wird unten von einer Kante 18 seitlich von zwei Biegekanten 34 und 35 sowie oben von einer Schnittkante 36 begrenzt. An der rechtwinkligen Biegekante 35 geht der Stielflansch 6 in einen dreieckförmigen Versteifungs- oder Zwischenflansch 37 über, der von der Biegelinie 35, einer Schnittkante 38 und einer weiteren Biegekante 39 begrenzt ist, die sich rechtwinklig zu der Biegekante 35 erstreckt. An die Biegekante 39 schließt sich ein erster Deckenflanschabschnitt 9a an. Dieser Deckenflanschabschnitt 9a ist in der Draufsicht auf den Zuschnitt nach Fig. 3 rechteckig. Er wird begrenzt von der Schnittkante 11, einer weiteren Schnittkante 41 sowie einer Biegekante 42, die in eine gerade Schnittkante 43 gerade übergeht.

Über die Biegekante 42 ist der Deckenflanschabschnitt 9a mit einer etwa hakenförmigen Lasche 44 verbunden, die von einer Schnittkante 46, einer Schnittkante 47, einer Schnittkante 48 und einer Schnittkante 49 begrenzt ist. Die Schnittkante 46 beginnt, an der Übergangsstelle zwischen der Biegekante 42 und der Schnittkante 43 und erstreckt sich von dort unter einem Winkel von 45° gegenüber der Biegekante 42 in Richtung von der Schnittkante 11 weg. An dem von dem Deckenflanschabschnitt 9a abliegenden Ende geht die Schnittkante 45 in die Schnittkante 47 über, die parallel zu der Biegekante 42 verläuft. Die Schnittkante 48 ist rechtwinklig zu der Schnittkante 47 sowie rechtwinklig zu der Schnittkante 49, die zu der Biegekante 42 zurückführt. Dadurch entsteht ein Laschenabschnitt 45, der, wie der Zuschnitt zeigt, über die Schnittkante 41 übersteht.

Bezüglich des Stielflansches 6 ist der Zuschnitt 8 fast spiegelsymmetrisch. Der wesentliche Unterschied besteht darin, daß der links von dem Stielflansch 6 liegende Bereich des Zuschnitts 8 etwas länger ist. Es tauchen jedoch prinzipiell dieselben Schnittkanten auf, die deswegen mit denselben Bezugszeichen und dem Zusatz "a" belegt sind. Sie haben prinzipiell denselben Verlauf, sind nur spiegelbildlich.

Aufgrund der längeren Gestaltung des linken Teils des Zuschnitts ist der dort auftretende Zwischenflansch 38a nicht dreieck-, sondern trapezförmig, so daß sich die Schnittkante 18 zu dem Zwischenflansch 38a fortsetzt und dessen unteren Schnittkante bildet.

Der beschriebene Zuschnitt 8 wird längs der Biegekante 35, bezogen auf die Darstellung nach Fig. 3, nach oben auf den Betrachter zu gebogen. Dadurch kommt gedanklich der Stielflansch 6 aus der Zeichenebene heraus und steht auf der Zeichenebene senkrecht. Sodann wird der Zuschnitt längs der Biegekante 35 nach rechts abgewinkelt, d.h. aus der gedachten senkrechten Stellung auf der Zeichenebene in eine Position parallel zur Zeichenebene nach rechts zeigend. Der Verstärkungsflansch 37 verläuft somit parallel zu der durch den Zwischenflansch 38a definierten Ebene, jedoch gegenüber diesem seitlich versetzt. Mit anderen Worten, der Zwischenflansch 37a, der Stielflansch 6 und der Zwischenflansch 37 bilden eine Verkröpfung, wie sie in Fig. 2 zu erkennen ist.

Die mit den Zwischenflanschen 37 und 37a einstückigen Abschnitte 9a und 9b des Deckenflansches 9 werden längs der Biegekanten 39 und 39a in jeweils entgegengesetzte Richtungen um 90° umgebogen und überdecken so den zwischen dem Stielflansch 6 und dem betreffenden Zwischenflansch 37 bzw 37a gebildeten Winkelbereich an der Oberseite. Dabei bildet ein Abschnitt die Verlängerung des anderen Abschnitts; sie liegen außerdem in einer gemeinsamen Ebene.

Infolge der Verkröpfung sind die ursprünglich an dem Zuschnitt 8 um die Breite des Stielflansches 6 voneinander entfernten Schnittkanten 41, 41a in unmittelbar angrenzende Nähe gekommen, so daß die Deckenflanschabschnitte 9a und 9b den nur durch einen geringen Spalt unterbrochenen Deckenflansch 9 bilden.

Die beiden Laschen 44 und 44a sind entlang den Biegekanten 42 und 42a um 90° nach unten gebogen, wodurch ihre freistehenden Fortsätze 45 und 45a auf der Außenseite jeweils eines der beiden Verstärkungsflansche 37 und 37a zu liegen kommen, wie dies ebenfalls Fig. 2 erkennen läßt. Die Fortsätze 45 und 45a liegen flach auf dem jeweils anderen Zwischenflansch 37 bzw. 37a auf und können dort mit Hilfe von Materialumformungen, beispielsweise Durchsetzfügen oder anderen Stanztechniken, fixiert werden.

In dem Stielflansch 6, der im übrigen glatt und ohne weitere Erhebungen ist, sind insgesamt zwei Öffnungen 33 übereinander enthalten. Zwecks der seitlichen Befestigung des Stiels 4 an einem der Zwischenflansche 37 enthält auch der Zwischenflansch 27a eine weitere Öffnung 51.

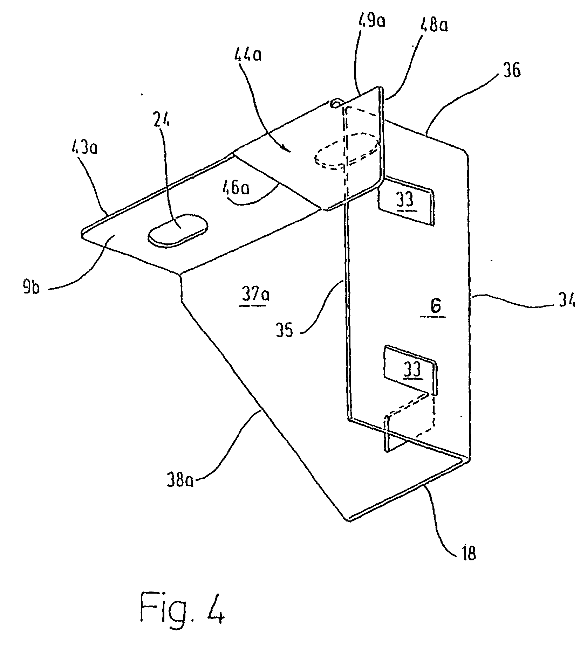

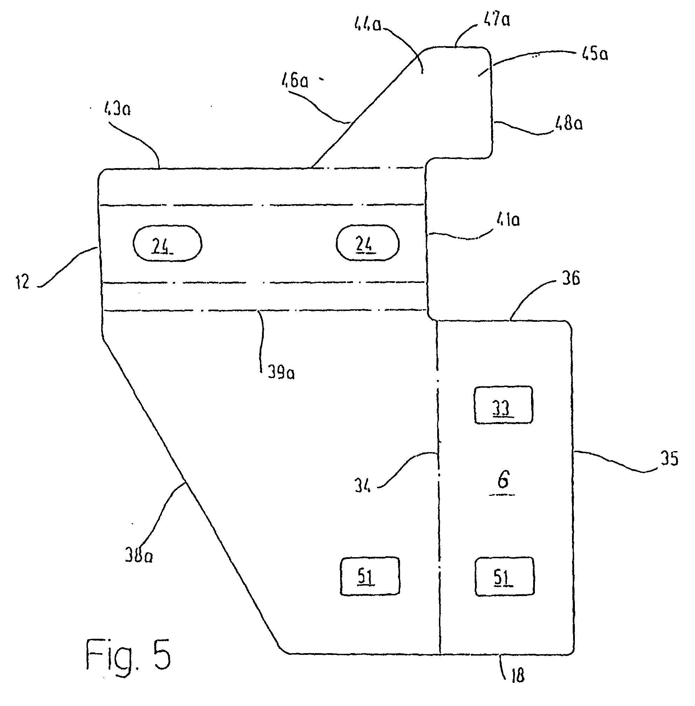

Die Fig. 4 und 5 zeigen eine Kopfplatte 5, die quasi die Hälfte der Kopfplatte 5 nach Fig. 2 darstellt. Sie enthält, ausgehend von dem Stielflansch 6, lediglich den Zwischenflansch 37a, den Deckenflanschabschnitt 9a und die Lasche 44a. Im Gebrauch wird diese Kopfplatte 5 mit einer zweiten, genauso ausgebildeten Kopfplatte 5 verwendet, und zwar so, daß von beiden Kopfplatten 5 die beiden Stielflansche 6 aufeinandergelegt werden. Es entsteht dann insgesamt eine Konfiguration, ähnlich wie in Fig. 2. Dementsprechend bezeichnet die Linie 35 keine Bieglinie sondern eine Schnittkante.

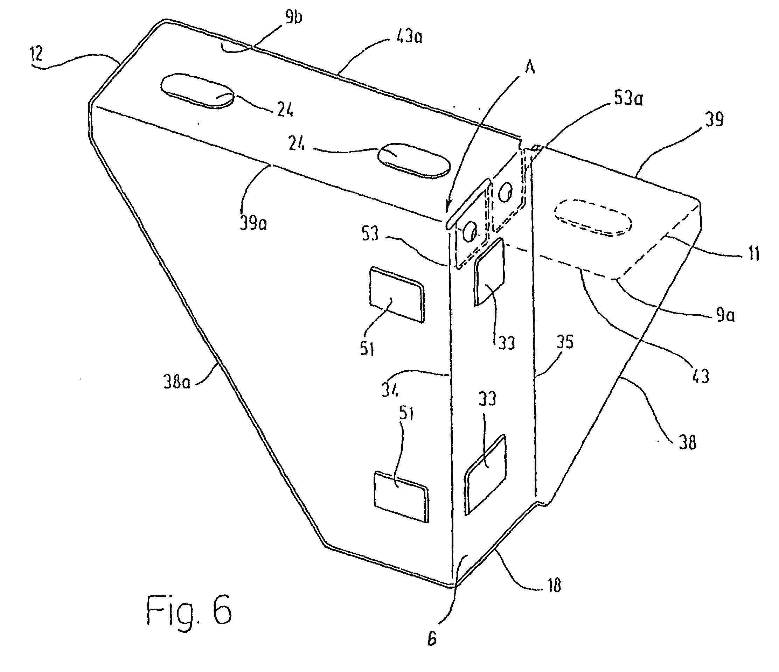

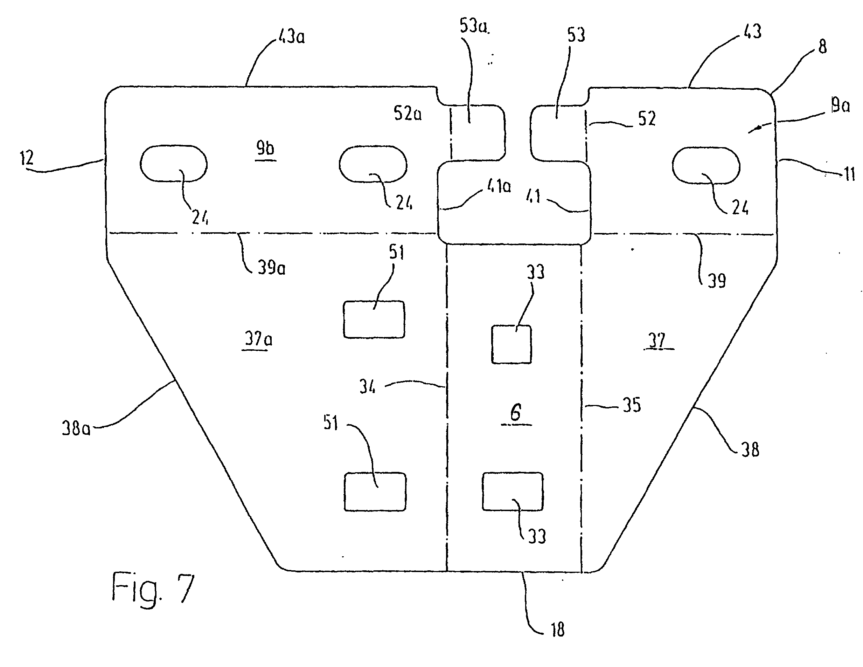

Die einstückige, im Bereich des Stielflansches 6 quer zu dessen Längserstreckung gekröpfte Kopfplatte 5 läßt sich auch mit einem Zuschnitt 8 erzeugen, wie er in Fig. 7 veranschaulicht ist. Die aus diesem Zuschnitt 8 erhaltene Konfiguration zeigt Fig. 6, wobei zum besseren Verständnis gesagt sei, daß die mit "A" bezeichnete Ecke eine Innenecke ist, die aus der Sicht des Betrachters konkav ist.

Soweit an der Kopfplatte 5 Strukturelemente auftauchen, die bereits beschrieben sind, werden dieselben Bezugszeichen verwendet.

Auf dem Zuschnitt 8 geht der rechteckige Stielflansch 6 über die Biegekanten 34 und 35 in die beiden Zwischenflansche 37 und 37a über. Diese sind von denselben Begrenzungslinien abgeteilt, wie dies im Zusmamenhang mit Fig. 3 erläutert ist.

Der Deckenflanschabschnitt 9a ist von der Schnittkante 11, die über die gesamte Länge des Deckenflanschabschnitts 9a durchlaufende Schnittkante 43 sowie die über ein Stück sich erstreckende Schnittkante 41, die in eine Biegekante 52 übergeht, und die Biegekante 39 begrenzt. Der von diesen Linien und Kanten eingeschlossene Bereich ist rechteckig.

An die Biegekante 52, die an dem Zuschnitt 8a der Biegekante 52a genau gegenübersteht und etwa halb so lang ist, wie die Schnittkante 11, geht der Deckenflanschabschnitt 9a bzw. 9b in eine kurze rechteckige Lasche 53 bzw. 53a über.

Das Umformen des Zuschnitts 8 nach Fig. 7 zu der Kopfplatte 5 nach Fig. 6 geschieht, indem zunächst die beiden Zwischenflansche 37 und 37a mit gleichem Drehsinn längs den Biegekanten 34 und 35 von dem Stielflansch 6 abgekantet werden. Sodann werden die Laschen 53 und 53a längs den Biegekanten 52 und 52 nach unten gebogen. Anschließend wird der Deckenflanschabschnitt 9b durch Umbiegen des Zuschnitts 8 längs der Biegekante 39a erzeugt, wodurch die Lasche 52a auf der vom Betrachter abgewandten Seite des Stielflansches 6 (bezogen auf die Darstellung von Fig. 6) in der Nähe der Biegekante 35 zu liegen kommt. Sodann wird der Zuschnitt 8 auch längs der Biegekante 39 umgebogen, um den Deckenflanschabschnitt 9a in die richtige Lage zu bekommen. Die Lasche 53 kommt dadurch auf derselben Seite des Stielflansches 6 zur Anlage wie die Lasche 53a. Anschließend werden beide Laschen 53 und 53a mittels Durchsetzfügen oder andere Umformungsvorgänge an dem Stielflansch 6, an dem sie im übrigen satt und flach anliegen, fixiert.

Die in dem Stielflansch 6 enthaltenen Öffnungen 33 und die in dem Zwischenflansch 37a enthaltenen Öffnungen 51 dienen, wie vorher, der Befestigung des Stiels 4 mit Hilfe von Flachrundkopfschrauben mit Vierkantansatz (Schloßschrauben).

Bei. der fertig gebogenen Kopfplatte 5 liegen die beiden Kopfplattenabschnitte 9a und 9b in einer gemeinsamen Ebene und können mit Hilfe der darin enthaltenen ovalen Löcher, die den Durchgangsöffnungen 24 entsprechen, an der Decke befestigt werden.

Eine weitere Versteifung des Deckenflansches kann erreicht werden, wenn die dort enthaltenen Durchgangsöffnungen für die Befestigungsschrauben von einer umlaufenden Sicke eingerahmt sind.

Die beschriebenen Kopfplatten sind aus einem einzigen Blechzuschnitt durch Umformen hergestellt. Aufgrund des Umformungsvorgangs entsteht ein Stielflansch, an dem der Stiel zu befestigen ist sowie wenigstens ein Deckenflansch, mit dem die Kopfplatte an der Decke des Gebäudes anzuschrauben ist. Je nach Ausführungsform kann der Deckenflansch entweder geteilt oder ungeteilt sein oder es können bei der schweren Ausführung zwischen dem Stielflansch und dem Deckenflansch zusätzlich Zwischenflansche enthalten sein.

## Patentansprüche

1. Kopfplatte (5), die zum Anbringen von Stielen (4) von Kabeltragkonstruktionen (1) an Decken u. dgl. von Räumen und Gebäuden eingerichtet und in Gestalt eines einstückigen Blechformteils ausgeführt ist, das durch Umformen eines einzigen Blechzuschnitts (8) gebildet ist und aufweist:
einen zur Anlage an der Decke eingerichteten Deckenflansch (9), der zwei Abschnitte aufweist und der in jedem Abschnitt wenigstens eine Durchgangsöffnung (24) für wenigstens eine Befestigungsschraube enthält, und
einen zur Anbringung eines Stiels (4) vorgesehenen Stielflansch (6), der eine Flachseite aufweist, an der ein Stiel (4) zur Anlage zu bringen ist und der an seinen beiden in Gebrauchsstellung zumindest etwa vertikal verlaufenden Seitenkanten über eine dort befindliche Biegekante (34,35) in dreieck- oder trapezförmigen Zwischenflansche (37,37a) übergeht, die zu entgegengesetzten Seiten gegenüber dem Stielflansch (6) abgewinkelt sind und von denen jeder über eine Biegekante mit einem jeweils zugehörigen Abschnitt des Deckenflanschs (9) verbunden ist,
wobei sich an einem jeweiligen Zwischenflansch (37,37a) der über eine Biegekante (39,39a) zugehörige Abschnitt (9a,9b) des Deckenflansches (9) und der Stielflasch (6) auf der selben Seite des Zwischenflansches (37,37a) befinden, und
wobei der Deckenflansch (9) eine Ebene definiert, die senkrecht auf einer von dem Stielflansch (6) definierten Ebene steht.

2. Kopfplatte (5), die zum Anbringen von Stielen (4) von Kabeltragkonstruktionen (1) an Decken u. dgl. von Räumen und Gebäuden eingerichtet und in Gestalt zweier miteinander verbundener einstückiger Blechformteile ausgeführt ist, die durch Umformen eines einzigen Blechzuschnitts (8) gebildet sind und von denen jeder aufweist:
einen zur Anlage an der Decke eingerichteten Deckenflansch (9), der wenigstens eine Durchgangsöffnung (24) für wenigstens eine Befestigungsschraube enthält, und
einen zur Anbringung eines Stiels (4) vorgesehenen Stielflansch (6), der eine Flachseite aufweist, an der ein Stiel (4) zur Anlage zu bringen ist und der an einer seinen beiden in Gebrauchsstellung zumindest etwa vertikal verlaufenden Seitenkanten über eine dort befindliche Biegekante (34,35) in einen dreieck- oder trapezförmigen Zwischenflansch (37,37a) übergeht, der über eine Biegekante (34,35) mit dem Deckenflansch (9) verbunden ist
wobei an dem Zwischenflansch (37,37a) sich der Deckenflansches (9) und der Stielflasch (6) auf der selben Seite des Zwischenflansches (37,37a) befinden und
wobei die beiden Blechformteile (5) im Bereich ihrer Stielflansche (6) miteinander so verbunden sind, daß die Zwischenflansche (37a) an gegenüber liegenden Seiten zu entgegengesetzten Richtungen wegstehen und beide Deckenflansche (9) eine gemeinsame Ebene definieren, die senkrecht auf einer von dem Stielflansch (6) definierten Ebene steht.

3. Kopfplatte nach Anspruch 1 oder 2, **dadurch gekennzeichnet, daß** jede Durchgangsöffnung (24) von einer um die Durchgangsöffnung (24) umlaufende Sicke umgeben ist.

4. Kopfplatte nach Anspruch 1 oder 2, **dadurch gekennzeichnet, daß** der Zwischenflansch eine Ebene definiert, die senkrecht auf der von dem Deckenflansch (9) definierten Ebene und senkrecht auf der von dem Stielflansch (6) definierten Ebene steht.

5. Kopfplatte nach Anspruch 1 oder 2, **dadurch gekennzeichnet, daß** von dem Deckenflansch (9) oder jedem Abschnitt des Deckenflansches (9) eine von dem jeweiligen Deckenflansch (9) oder Abschnitt des Deckenflansches (9) abgebogene Lasche (44,44a) ausgeht, die derart geformt ist, daß sie auf dem anderen Zwischenflansch aufliegt.

6. Kopfplatte nach Anspruch 5, **dadurch gekennzeichnet, daß** jede Lasche (44,44a) mit dem Zwischenflansch (37,37a), auf dem sie aufliegt, durch Materialumformung, z.B. Durchsetzfügen formschlüssig verbunden ist.

7. Kopfplatte nach Anspruch 1 oder 2, **dadurch gekennzeichnet, daß** von dem Deckenflansch (9) oder jedem Abschnitt des Deckenflansches (9) eine von dem jeweiligen Deckenflansch (9) oder dem jeweiligen Abschnitt des Deckenflansches (9) abgebogene Lasche (53,53a) ausgeht, die derart geformt ist, daß sie auf dem Stielflansch (6) aufliegt.

## Claims

1. Head plate (5), which is fitted for the attachment of stems (4) of cable support structures (1) to ceilings and suchlike of rooms and buildings and is constructed in the form of a sheet metal preform in one piece, which is formed by reshaping a single sheet metal blank (8), and has:
a ceiling flange (9), which is fitted for abutment against the ceiling, has two sections and in each section contains at least one opening (24) for at least one fastening screw, and
a stem flange (6), which is provided for the attachment of a stem (4), has a flat side, against which a stem (4) is to be brought into abutment, and which at its two side edges, which run at least approximately vertically in the position of use, merges via a bending edge (34, 35) located there into triangular or trapezoidal intermediate flanges (37, 37a), which on opposing sides are angled off in relation to the stem flange (6) and each of which is connected via a bending edge to a respectively associated section of the ceiling flange (9),
wherein on a respective intermediate flange (37, 37a) the associated section (9a, 9b) of the ceiling flange (9) via a bending edge (39, 39a) and the stem flange (6) are located on the same side of the intermediate flange (37, 37a), and
wherein the ceiling flange (9) defines a plane which stands vertically on a plane defined by the stem flange (6).

2. Head plate (5), which is fitted for the attachment of stems (4) of cable support structures (1) to ceilings and suchlike of rooms and buildings and is constructed in the form of two interconnected sheet metal preforms in one piece, which are formed by reshaping a single sheet metal blank (8), and each of which has:
a ceiling flange (9), which is fitted for abutment against the ceiling and has at least one opening (24) for at least one fastening screw, and
a stem flange (6), which is provided for the attachment of a stem (4), has a flat side, against which a stem (4) is to be brought into abutment, and which at its two side edges, which run at least approximately vertically in the position of use, merges via a bending edge (34, 35) located there into a triangular or trapezoidal intermediate flange (37, 37a), which is connected via a bending edge (34, 35) to the ceiling flange (9),
wherein the ceiling flange (9) and the stem flange (6) are located on the intermediate flange (37, 37a) on the same side of the intermediate flange (37, 37a), and
wherein the two sheet metal preforms (5) are connected to one another in the region of their stem flanges (6) in such a way that the intermediate flanges (37a) project in different directions on opposing sides and the two ceiling flanges (9) define a common plane which stands vertically on a plane defined by the stem flange (6).

3. Head plate according to Claim 1 or 2, **characterised in that** each opening (24) is enclosed by a crimp surrounding the opening (24).

4. Head plate according to Claim 1 or 2, **characterised in that** the intermediate flange defines a plane which stands vertically on the plane defined by the ceiling flange (9) and vertically on the plane defined by the stem flange (6).

5. Head plate according to Claim 1 or 2, **characterised in that** a lug (44, 44a) bent off from the respective ceiling flange (9) or section of the ceiling flange (9) extends from the ceiling flange (9) or of each section of the ceiling flange (9), said lug being shaped in such a manner that it lies on the other intermediate flange.

6. Head plate according to Claim 5, **characterised in that** each lug (44, 44a) is positively connected to the intermediate flange (37, 37a) on which it lies by reshaping of material, e.g. displacement joining.

7. Head plate according to Claim 1 or 2, **characterised in that** a lug (53, 53a) bent off from the respective ceiling flange (9) or the respective section of the ceiling flange (9) extends from the ceiling flange (9) or each section of the ceiling flange (9), said lug being shaped in such a manner that it lies on the stem flange (6).

## Revendications

1. Plaque de tête (5) prévue pour le montage de supports de type « pendards » (4) de structures de supports de câbles (1) au plafond et similaire de locaux et de bâtiments, et réalisée sous la forme d'une pièce en tôle monobloc emboutie obtenue par façonnage d'un flan de tôle (8) unique, présentant
- une embase de plafond (9) destinée à venir en appui sur le plafond, qui présente deux parties, avec dans chaque partie au moins une ouverture de passage (24) pour au moins une vis de fixation, et
- une aile (6) prévue pour le montage d'un pendard (4), qui présente une face plane sur laquelle un pendard (4) vient en appui et qui, au niveau de ses deux bords latéraux, au moins sensiblement verticaux dans la position d'utilisation, se raccorde par une arête de pliage (34, 35) à des ailes intermédiaires (37, 37a) en forme de triangle ou de trapèze, qui sont pliées dans des directions opposées par rapport à l'aile (6) de montage du pendard et sont liées chacune par un bord de pliage à une partie correspondante associée de l'embase de plafond (9),
- sur une aile intermédiaire (37, 37a), la partie (9a, 9b) de l'embase de plafond (9) associée par une arête de pliage (39, 39a) et l'aile de pendard (6) étant disposées du même côté de l'aile intermédiaire (37, 37a)
- l'embase de plafond (9) définissant un plan qui est perpendiculaire à un plan défini par l'aile de pendard (6).

2. Plaque de tête (5) prévue pour le montage de supports de type « pendards » (4) de structures de supports de câbles (1) au plafond et similaire de locaux et de bâtiments, et réalisée sous la forme de deux pièces en tôle embouties, monoblocs, liées entre elles, obtenues par façonnage d'un flan de tôle (8) unique, présentant
- une embase de plafond (9) agencée pour venir en appui sur le plafond, qui présente au moins une ouverture de passage (24) pour au moins une vis de fixation, et
- une aile (6) prévue pour le montage d'un pendard (4), qui présente une face plane sur laquelle un pendard (4) vient en appui et qui, au niveau de ses deux bords latéraux, au moins sensiblement verticaux dans la position d'utilisation, se raccorde par une arête de pliage (34, 35) à une aile intermédiaire (37, 37a) en forme de triangle ou de trapèze, qui est liée par un bord de pliage (34, 35) à l'embase de plafond (9),
- sur une aile intermédiaire (37, 37a), l'embase de plafond (9) et l'aile de pendard (6) étant disposées du même côté de l'aile intermédiaire (37, 37a)
- les deux pièces en tôle (5) dans la région de leurs ailes de pendard (6) étant liées l'une à l'autre de telle sorte que les ailes intermédiaires (37a) sur des faces opposées soient orientées dans des directions opposées et les deux embases de plafond (9) définissent un plan commun qui est perpendiculaire au plan défini par l'aile de pendard (6).

3. Plaque de tête selon la revendication 1 ou 2, **caractérisée en ce que** chaque ouverture de passage (24) est entourée d'une moulure annulaire qui s'étend autour de l'ouverture de passage (24).

4. Plaque de tête selon la revendication 1 ou 2, **caractérisée en ce que** l'aile intermédiaire définit un plan qui est perpendiculaire au plan défini par l'embase de plafond (9) et perpendiculaire au plan défini par l'aile de pendard (6).

5. Plaque de tête selon la revendication 1 ou 2, **caractérisée en ce que** de l'embase de plafond (9) ou de chaque partie d'embase de plafond (9) part une patte (44, 44a) pliée à partir de l'embase de plafond (9) ou de chaque partie d'embase de plafond (9) qui est façonnée de telle sorte qu'elle repose sur l'autre aile intermédiaire.

6. Plaque de tête selon la revendication 5, **caractérisée en ce que** chaque patte (44, 44a) est liée par formes, par exemple par des joints à emboîtement, à l'aile intermédiaire (37, 37a) sur laquelle elle repose.

7. Plaque de tête selon la revendication 1 ou 2, **caractérisée en ce que** de l'embase de plafond (9) ou de chaque partie d'embase de plafond (9) part une patte (53, 53) pliée à partir de l'embase de plafond (9) ou de chaque partie d'embase de plafond (9) qui est façonnée de telle sorte qu'elle repose sur l'aile de pendard (6).
